# EUROPEAN PATENT APPLICATION

(11) **EP 3 594 305 A1**
(43) Date of publication of application: **15.01.2020**
(21) Application number: 18764397.8
(22) Date of filing: 27.02.2018
(51) Int. Cl.: C09K 3/00, B05D 5/00, B05D 7/24, C08F 220/04, C08F 220/10, C08L 83/12, C09D 133/08, C09D 183/06, C09K 3/18, D06M 15/263, D06M 15/647

(54) **OIL-REPELLENT COMPOSITION**

(30) Priority: 07.03.2017 JP 2017042867
(71) Applicant: Showa Denko K.K., Tokyo 105-8518 (JP)
(72) Inventor: MURATA Naoki, Tokyo 105-8518 (JP)
(74) Representative: Strehl Schübel-Hopf & Partner
(86) International application number: PCT/JP2018/007211
(87) International publication number: WO 2018/163911

(57) **Abstract**

An oil-repellent composition is provided containing an aqueous emulsion in which a copolymer (A) containing a constituent unit based on an ethylenically unsaturated carboxylic acid ester monomer (A1) and a constituent unit based on an ethylenically unsaturated carboxylic acid monomer (A2) is dispersed in an aqueous medium (B), and polyether-modified polydimethyl siloxane (C).

## Description

### TECHNICAL FIELD

The present invention relates to an oil-repellent composition, a fiber-treating agent, a paper-treating agent, a coating agent, a method of preparing an oil-repellent composition, and a method of oil-repellent-treating a base material.

Priority is claimed on Japanese Patent Application No. 2017-042867, filed March 7, 2017, the content of which is incorporated herein by reference.

### BACKGROUND ART

In the related art, as a method of imparting oil repellency to a base material such as fiber or paper, an oil repellency treatment using an oil-repellent composition has been performed.

Examples of the oil-repellent composition includes those containing a compound having a perfluoroalkyl group having 8 or more carbon atoms.

However, the US Environmental Protection Agency has pointed out that a compound containing a perfluoroalkyl group having 8 or more carbon atoms may produce perfluorooctanoic acid (perfluoro-octanoic acid (hereinafter, sometimes abbreviated as "PFOA")). Since PFOA is bioaccumulative and is not decomposed in the environment, it is required to reduce the use thereof.

For this reason, an oil-repellent composition having a compound containing a perfluoroalkyl group having a short carbon chain has been proposed.

For example, Patent Document 1 discloses a water- and oil-repellent composition which contains a water- and oil-repellent component which has a perfluoroalkyl group having 6 or less carbon atoms and a pyrazole block hydrophobic polyisocyanate water dispersion which contains a pyrazole block hydrophobic polyisocyanate and a nonionic surfactant.

Patent Document 2 discloses a water- and oil-repellent composition which contains a fluorine-containing polymer having a polyfluoroalkyl group having 1 to 6 carbon atoms, a fluorine-containing polymer having a constituent unit based on fluoroolefin, and an aqueous medium.

In recent years, even in a compound containing a perfluoroalkyl group having a short carbon chain, reduction in the use has been considered in order to reduce the burden on the environment. For this reason, an oil-repellent composition which does not contain a fluorine compound has been proposed.

For example, Patent Document 3 describes an oil-repellent agent for fiber treatment which does not contain a fluorine compound but contains a silicone-acrylic copolymer.

### Citation List

### Patent Literature

Patent Document 1: Japanese Unexamined Patent Application, First Publication No. 2012-031285
Patent Document 2: PCT International Publication No. WO 2012/020806
Patent Document 3: Japanese Unexamined Patent Application, First Publication No. 2016-102272

### DISCLOSURE OF INVENTION

### Technical Problem

However, an oil-repellent composition which does not contain a conventional fluorine compound may be unable to impart sufficient oil repellency to a base material.

The present invention is made in view of the above circumstance, and an object thereof is to provide an oil-repellent composition which is capable of imparting high oil repellency to a base material, and a method of preparing the oil-repellent composition.

Another object of the present invention is to provide a fiber-treating agent, a paper-treating agent, and a coating agent containing an oil-repellent composition of the present invention.

Still another object of the present invention is to provide a method of oil-repellent-treating a base material using the oil-repellent composition of the present invention.

### Solution to Problem

The present inventor has intensively studied to achieve the above-mentioned objects.

As a result, the present invention has been conceived based on the finding that an oil-repellent composition may be used which contains a polyether-modified polydimethyl siloxane and an aqueous emulsion in which a copolymer having a constituent unit based on an ethylenically unsaturated carboxylic acid ester monomer and a constituent unit based on an ethylenically unsaturated carboxylic acid monomer is dispersed in the aqueous medium.

That is, the present invention relates to the following matters.

A first aspect of the present invention is the following oil-repellent composition.
[1] An oil-repellent composition containing: an aqueous emulsion in which a copolymer (A) containing, as an essential component, a constituent unit based on an ethylenically unsaturated carboxylic acid ester monomer (A1) and a constituent unit based on an ethylenically unsaturated carboxylic acid monomer (A2) is dispersed in an aqueous medium (B); and
   a polyether-modified polydimethyl siloxane (C).
   The oil-repellent composition according to the first aspect preferably includes the following features.
[2] The oil-repellent composition according to the above [1],
   in which polyether described in the polyether-modified polydimethyl siloxane (C) is hydroxyl group-containing polyether.
[3] The oil-repellent composition according to the above [1] or [2],
   in which a content of the polyether-modified polydimethyl siloxane (C) is 0.1 to 20 parts by mass with respect to 100 parts by mass of the copolymer (A).
[4] The oil-repellent composition according to any one of the above [1] to [3],
   in which the constituent unit based on the ethylenically unsaturated carboxylic acid ester monomer (A1) is contained at 80% to 99% by mass with respect to the entire constituent units of the copolymer (A).
[5] The oil-repellent composition according to any one of the above [1] to [4],
   in which the constituent unit based on the ethylenically unsaturated carboxylic acid monomer (A2) is contained at 0.1% to 20% by mass with respect to the entire constituent units of the copolymer (A).
[6] The oil-repellent composition according to any one of the above [1] to [5],
   in which the ethylenically unsaturated carboxylic acid ester monomer (A1) is ester of alcohol having 1 to 8 carbon atoms and (meth)acrylic acid.
[7] The oil-repellent composition according to any one of the above [1] to [6],
   in which the ethylenically unsaturated carboxylic acid ester monomer (A1) is one or two or more kinds selected from the group consisting of methyl (meth)acrylate, ethyl (meth)acrylate, butyl (meth)acrylate, and 2-ethyl hexyl (meth)acrylate.
[8] The oil-repellent composition according to any one of the above [1] to [7],
   in which the ethylenically unsaturated carboxylic acid monomer (A2) is an unsaturated carboxylic acid having 3 to 14 carbon atoms.
[9] The oil-repellent composition according to any one of the above [1] to [8],
   in which the ethylenically unsaturated carboxylic acid monomer (A2) is acrylic acid and/or methacrylic acid.
[10] The oil-repellent composition according to any one of the above [1] to [9],
   further containing a polymer (D) having a constituent unit based on ester (D1) of alcohol having a chain hydrocarbon group having 8 to 18 carbon atoms and (meth)acrylic acid.
   Second to fourth aspects of the present invention are a fiber-treating agent, a paper-treating agent, and a coating agent as follows.
[11] A fiber-treating agent which contains the oil-repellent composition according to any one of [1] to [10].
[12] A paper-treating agent which contains the oil-repellent composition according to any one of [1] to [10].
[13] A coating agent which contains the oil-repellent composition according to any one of [1] to [10].
   A fifth aspect of the present invention is a preparation method as follows.
[14] A method of preparing the oil-repellent composition according to any one of the above [1] to [10], the method including:
   a step of obtaining, by emulsion polymerization, an aqueous emulsion in which a copolymer (A) having a constituent unit based on an ethylenically unsaturated carboxylic acid ester monomer (A1) and a constituent unit based on an ethylenically unsaturated carboxylic acid monomer (A2) is dispersed in an aqueous medium (B); and
   a step of mixing the aqueous emulsion and a polyether-modified polydimethyl siloxane (C).

   A sixth aspect of the present invention is the following method of oil-repellent-treating a base material.
[15] A method of oil-repellent-treating a base material, the method including: a step of coating a base material with the oil-repellent composition according to any one of the above [1] to [10] and then heat-treating the coated base material at 80°C to 170°C.

### Advantageous Effects of Invention

The oil-repellent composition of the present invention contains an aqueous emulsion (aqueous emulsion X) in which a copolymer (A) having a constituent unit based on an ethylenically unsaturated carboxylic acid ester monomer (A1) and a constituent unit based on an ethylenically unsaturated carboxylic acid monomer (A2) is dispersed in an aqueous medium (B) and polyether-modified polydimethyl siloxane (C), and thus can impart high oil repellency to a base material.

Further, according to the oil-repellent composition of the present invention, high oil repellency can be imparted to the base material even without containing a fluorine compound having a large load on the environment.

### BEST MODE FOR CARRYING OUT THE INVENTION

Hereinafter, preferable examples of an oil-repellent composition, a fiber-treating agent, a paper-treating agent, a coating agent, a method of preparing the oil-repellent composition, and a method of oil-repellent-treating a base material according to the present invention will be described in detail. The present invention is not limited to only the embodiments described below. Modifications, additions, omissions, and other modifications can be made to numerical values, amounts, types, positions, characteristics, and the like without departing from the gist of the present invention.

### "Oil-repellent composition"

An oil-repellent composition of the present embodiment contains an aqueous emulsion (aqueous emulsion X) in which a copolymer (A) having a constituent unit based on an ethylenically unsaturated carboxylic acid ester monomer (A1) and a constituent unit based on an ethylenically unsaturated carboxylic acid monomer (A2) is dispersed in an aqueous medium (B) and polyether-modified polydimethyl siloxane (C).

### [Copolymer (A)]

The copolymer (A) has a constituent unit based on an ethylenically unsaturated carboxylic acid ester monomer (A1) and a constituent unit based on an ethylenically unsaturated carboxylic acid monomer (A2).

### "Ethylenically unsaturated carboxylic acid ester monomer (A1)"

When the copolymer (A) has a constituent unit based on an ethylenically unsaturated carboxylic acid ester monomer (A1), it becomes an oil-repellent composition which has excellent stability and can impart high oil repellency to the base material.

The ethylenically unsaturated carboxylic acid ester monomer (A1) is not particularly limited as long as it is a compound having a polymerizable carbon-carbon double bond and a carboxylic acid ester structure. Preferably, ester of alcohol having 1 to 8 carbon atoms and (meth)acrylic acid is used, and the ester compound may have an amino group and a hydroxyl group is preferable. As the ethylenically unsaturated carboxylic acid ester monomer (A1), for example, methyl (meth)acrylate, ethyl (meth)acrylate, butyl (meth)acrylate, 2-ethyl hexyl (meth)acrylate, allyl (meth)acrylate, ethylene glycol di (meth)acrylate, methoxyethyl (meth)acrylate, butoxyethyl (meth)acrylate, dimethyl aminoethyl (meth)acrylate, and diethyl aminoethyl (meth)acrylate can be used. These ethylenically unsaturated carboxylic acid ester monomers (A1) can be used alone or two or more kinds thereof can be used in combination.

In the present invention, "(meth)acrylate" means "acrylate" and "methacrylate".

In a case where the oil-repellent composition is used for oil-repellent treatment of a base material made of paper or fiber, among the ethylenically unsaturated carboxylic acid ester monomers (A1), it is preferable to use one or more kinds selected from the group consisting of methyl (meth)acrylate, ethyl (meth)acrylate, butyl (meth)acrylate, and 2-ethyl hexyl (meth)acrylate. In a case where the aforementioned ethylenically unsaturated carboxylic acid ester monomer (A1) is used, it becomes easy to adjust the feel of the base material made of paper or fiber after oil-repellent treatment.

The constituent unit based on the ethylenically unsaturated carboxylic acid ester monomer (A1) is preferably contained in a range of 80% to 99% by mass, is more preferably 90% to 99% by mass, and is still more preferably 95% to 99% by mass, with respect to the entire constituent units of the copolymer (A).

When a ratio of the constituent unit based on the ethylenically unsaturated carboxylic acid ester monomer (A1) (ratio of the constituent unit derived from the ethylenically unsaturated carboxylic acid ester monomer (A1) in the copolymer (A)) is 80% by mass or more, the stability of the aqueous emulsion in which the copolymer (A) is dispersed in the aqueous medium (B) is excellent, and an oil-repellent composition with excellent stability is obtained. When the ratio of the constituent unit based on the ethylenically unsaturated carboxylic acid ester monomer (A1) is 99% by mass or less, the content of the constituent unit based on the ethylenically unsaturated carboxylic acid monomer (A2) is easily ensured. As a result, an oil-repellent composition capable of imparting even more excellent oil repellency to a base material is easily obtained.

### "Ethylenically unsaturated carboxylic acid monomer (A2)"

When the copolymer (A) has a constituent unit based on an ethylenically unsaturated carboxylic acid monomer (A2), an oil-repellent composition which is capable of imparting high oil repellency to the base material can be obtained.

The ethylenically unsaturated carboxylic acid monomer (A2) is not particularly limited as long as it is a compound having a polymerizable carbon-carbon double bond and a carboxy group. Preferably unsaturated carboxylic acid having 3 to 14 carbon atoms is exemplified. For example, (meth)acrylic acid, itaconic acid, carboxyethyl (meth)acrylate, carboxypentyl (meth)acrylate, 2-(meth)acryloyloxyethyl hexahydrophthalic acid, 2-(meth)acryloyloxypropyl hexahydrophthalic acid, 2-(meth)acryloyloxyethyl phthalic acid, 2-(meth)acryloyloxyethyl succinic acid, 2-(meth)acryloyloxyethyl maleic acid, carboxypoly caprolactone mono (meth)acrylate, and 2-(meth)acryloyl oxyethyl tetrahydrophthalic acid can be used. These ethylenically unsaturated carboxylic acid monomers (A2) can be used alone or two or more kinds thereof can be used in combination. Among the above ethylenically unsaturated carboxylic acid monomers (A2), in particular, it is preferable to use acrylic acid and/or methacrylic acid, since the copolymerizability with the ethylenically unsaturated carboxylic acid ester monomer (A1) is high, and a stable aqueous emulsion can be obtained.

In the present invention, "(meth)acryl" means "acryl" and "methacryl", and "(meth)acrylo" means "acrylo" and "methacrylo".

The constituent unit based on the ethylenically unsaturated carboxylic acid monomer (A2) is preferably 0.1% to 20% by mass, is more preferably 0.3% to 17% by mass, and is still more preferably 0.5 to 15% by mass with respect to the entire constituent units of the copolymer (A).

When a ratio of the constituent unit based on the ethylenically unsaturated carboxylic acid monomer (A2) (ratio of the constituent unit derived from the ethylenically unsaturated carboxylic acid monomer (A2) in the copolymer (A)) is 0.1 % by mass or more, an oil-repellent composition capable of imparting even more excellent oil repellency to a base material is easily obtained. When the ratio of the constituent unit based on the ethylenically unsaturated carboxylic acid monomer (A2) is 20% by mass or less, the content of the constituent unit based on an ethylenically unsaturated carboxylic acid ester monomer (A1) is easily ensured. As a result, an oil-repellent composition with excellent stability can be easily obtained.

### "Other monomers"

The copolymer (A) may have constituent units based on other monomers in addition to the constituent unit based on the ethylenically unsaturated carboxylic acid ester monomer (A1) and the constituent unit based on the ethylenically unsaturated carboxylic acid monomer (A2).

As other monomers, compounds other than the ethylenically unsaturated carboxylic acid ester monomer (A1) and the ethylenically unsaturated carboxylic acid monomer (A2), and having at least one polymerizable ethylenically unsaturated group are used.

Examples of the other monomers include compounds having a functional group such as a compound having an amide group such as (meth)acrylamide and N-methylol (meth)acrylamide and a compound having a nitrile group such as (meth)acrylonitrile, vinyl acetate, vinyl propionate, and sodium *ρ*-styrene sulfonate. In addition, at the time of preparing the aqueous emulsion in which the copolymer (A) is dispersed in the aqueous medium (B), a copolymerizable emulsifier used as a surfactant may be contained as another monomer. These other monomers can be used alone or two or more kinds thereof can be used in combination. Further, in order to adjust the molecular weight of the copolymer (A), a chain transfer agent such as mercaptan, thioglycolic acid and ester thereof, β-mercaptopropionic acid and ester thereof may be used.

### [Aqueous medium (B)]

The oil-repellent composition of the present invention is in a form of an aqueous emulsion. This dispersion medium is the aqueous medium (B) containing water as an essential component. The aqueous medium (B) may contain a hydrophilic solvent in addition to water.

The hydrophilic solvent is not particularly limited as long as it is an aqueous one that functions as a medium for dispersing the copolymer (A). Examples of the hydrophilic solvent include alcohols such as methyl alcohol, ethanol, n-propyl alcohol, isopropyl alcohol, t-butyl alcohol, and benzyl alcohol, and a nitrogen-containing organic solvent such as N-methylpyrrolidone, and they can be used alone, or two or more kinds thereof can be used in combination.

The content of the hydrophilic solvent in the aqueous medium (B) is preferably 10% by mass or less, and is more preferably 5% by mass or less. Since the oil-repellent composition is used by volatilizing the solvent, it is preferable that the aqueous medium (B) be only water, since water has a small burden on the working environment and workers' health. The lower limit of the proportion of water in the aqueous medium (B) can be selected as required. For example, it may be 0.01% by mass or more, 0.1% by mass or more, or 1% by mass or more.

The content of the aqueous medium (B) is preferably 30% to 90% by mass, is more preferably 40% to 80% by mass, and is still more preferably 50% to 70% by mass, with respect to the total of the copolymer (A), the aqueous medium (B), and the polyether-modified polydimethyl siloxane (C). When the content of the aqueous medium (B) is 30% by mass or more, an oil-repellent composition having high storage stability is obtained. Moreover, it is easy to apply the oil-repellent composition uniformly to a base material, and thus is preferable. When the content of the aqueous medium (B) is 90% by mass or less, it is possible to provide a practical oil-repellent composition that can be processed depending on the application.

In the content of the aqueous medium (B), a solid content concentration of the oil-repellent composition is preferably in a range of 10% to 70% by mass, and the solid content concentration is more preferably in a range of 20% to 60% by mass. When the solid content concentration of the oil-repellent composition is 70% by mass or less, an oil-repellent composition having high storage stability can be obtained. Moreover, it is easy to apply the oil-repellent composition uniformly to a base material, and thus is preferable. When the solid content concentration of the oil-repellent composition is 10% by mass or more, it is possible to provide a practical oil-repellent composition that can be processed depending on the application.

### [Polyether-modified polydimethyl siloxane (C)]

The polyether-modified polydimethyl siloxane (C) is obtained by partially or completely substituting a hydrogen atom of a methyl group of polyimide siloxane with polyether, and a terminal of the polyether is an alkoxy group or a hydroxyl group. The polyether-modified polydimethyl siloxane (C) is not particularly limited as long as it is any compound that enhances the oil repellency-improving effect of the oil-repellent composition.

For example, the type and number of polyethers (polyether groups) added as a side chain can be optionally selected. For example, the position and the number of polyether groups, which are bonded to Si of polydimethyl siloxane and originated from alkylene oxides such as ethylene oxide and propylene oxide, can be optionally selected. As another example, only one or both of the two end groups of polydimethyl siloxane may be modified with a polyether group. Alternatively, only one or both of the two end groups of polydimethyl siloxane and a side chain thereof may be modified with a polyether group. As a specific example, since the oil-repellent composition achieves excellent oil repellency-improving effects, polyether of the polyether-modified polydimethyl siloxane (C) is preferably hydroxyl group-containing polyether.

The proportion of methyl groups in polydimethyl siloxane in which a hydrogen atom is substituted by polyether can be selected optionally.

The polyether-modified polydimethyl siloxane (C) preferably has a molecular weight of 1,000 to 50,000, and more preferably 5,000 to 30,000. Commercially available products of polyether-modified polydimethyl siloxane (C) include KP series prepared by Shin-Etsu Chemical Co., Ltd., TEGO Protect 5100N prepared by Evonik Co., and the like, but are not limited thereto.

The content of the polyether-modified polydimethyl siloxane (C) is preferably 0.1 to 20 parts by mass, is more preferably 0.3 to 17 parts by mass, and is still more preferably 0.5 to 15 parts by mass, with respect to 100 parts by mass of the copolymer (A). When the content of the polyether-modified polydimethyl siloxane (C) is 0.1 parts by mass or more with respect to the 100 parts by mass of copolymer (A), an oil-repellent composition capable of imparting even more excellent oil repellency to a base material is easily obtained. When the content of the polyether-modified polydimethyl siloxane (C) is 20 parts by mass or less with respect to 100 parts by mass of the copolymer (A), in a case of performing the oil repellency treatment of the base material using this, a base material having excellent texture can be obtained after the oil-repellent treatment.

### [Polymer (D)]

When the oil-repellent composition of the present invention further contains a polymer (D) which has a constituent unit based on ester (D1) of alcohol having a chain hydrocarbon group having 8 to 18 carbon atoms and (meth)acrylic acid, it is possible to provide an oil-repellent composition having water repellency in addition to oil repellency, which is preferable.

The content of the polymer (D) is preferably 0.1 to 20 parts by mass, is more preferably 0.3 to 17 parts by mass, and is still more preferably 0.5 to 15 parts by mass with respect to 100 parts by mass of the copolymer (A). When the content of the polymer (D) is 0.1 parts by mass or more with respect to 100 parts by mass of copolymer (A), it is possible to provide an oil-repellent composition which can impart excellent water repellency to a base material. When the content of the polymer (D) is 20 parts by mass or less with respect to 100 parts by mass of the copolymer (A), in a case of performing the oil repellency treatment of the base material using this, a base material having excellent texture can be obtained after the oil-repellent treatment.

The polymer (D) has a constituent unit based on the ester (D1) of alcohol having a chain hydrocarbon group having 8 to 18 carbon atoms and (meth)acrylic acid. The polymer (D) is preferably obtained by polymerizing the ester (D1) of alcohol having a chain hydrocarbon group having 8 to 18 carbon atoms and (meth)acrylic acid.

The polymer (D) is more preferably in a state of an aqueous emulsion (aqueous emulsion (Y)) wherein the polymer is dispersed in an aqueous medium (B). The method for preparing the aqueous emulsion (Y) is based on the step of obtaining the aqueous emulsion (X) described later.

### "Ester (D1) of alcohol having a chain hydrocarbon group having 8 to 18 carbon atoms and (meth)acrylic acid"

The monomer (D1) is not particularly limited as long as it is an ester of alcohol having a chain hydrocarbon group having 8 to 18 carbon atoms and (meth)acrylic acid.

Examples of the ester (D1) of alcohol having a chain hydrocarbon group having 8 to 18 carbon atoms and (meth)acrylic acid include ethyl hexyl (meth)acrylate, dimethyl hexyl (meth)acrylate, octyl (meth)acrylate, butyl hexyl (meth)acrylate, nonyl (meth)acrylate, decyl (meth)acrylate, lauryl (meth)acrylate, tridecyl (meth)acrylate, and isostearyl (meth)acrylate. Among them, isostearyl acrylate and lauryl acrylate are preferable from the viewpoint of polymerization stability. These examples of the ester (D1) of alcohol having a chain hydrocarbon group having 8 to 18 carbon atoms and (meth)acrylic acid can be used alone, or two or more kinds thereof can be used in combination. In addition, (meth)acrylic acid may mean methacrylic acid or acrylic acid or both of them.

The constituent unit based on the ester (D1) of alcohol having a chain hydrocarbon group having 8 to 18 carbon atoms and (meth)acrylic acid is preferably contained at 30% to 100% by mass, is more preferably contained at 40% to 100% by mass, and is still is more preferably contained at 50% to 100% by mass, with respect to the entire constituent units of the polymer (D).

When the proportion of the constituent unit based on the ester (D1) of alcohol having a chain hydrocarbon group having 8 to 18 carbon atoms and (meth)acrylic acid (proportion of the constituent unit derived from the (D1) in the polymer (D)) is 30% by mass or more, it is possible to easily provide an oil-repellent composition which can impart excellent water repellency to a base material in addition to the oil repellency.

The polymer (D) may have constituent units based on other monomers in addition to the constituent unit based on the ester (D1) of alcohol having a chain hydrocarbon group having 8 to 18 carbon atoms and (meth)acrylic acid.

As other monomers, monomers other than the ethylenically unsaturated carboxylic acid ester monomer (A1), the ethylenically unsaturated carboxylic acid monomer (A2), and the ester (D1) of alcohol having a chain hydrocarbon group having 8 to 18 carbon atoms and (meth)acrylic acid described above are exemplified, and compounds having at least one polymerizable ethylenically unsaturated group can be used.

In a case where the polymer (D) is prepared as an aqueous emulsion in which the polymer (D) is dispersed in an aqueous medium (B), a copolymerizable emulsifier used as a surfactant may be contained as other monomers. These other monomers can be used alone or two or more kinds thereof can be used in combination. Further, in order to adjust the molecular weight of the polymer (D), a chain transfer agent such as mercaptan, thioglycolic acid and ester thereof, and β-mercaptopropionic acid and ester thereof may be used.

By adding the polymer (D) obtained by polymerizing a monomer having a long alkyl chain to the oil-repellent composition as a form of an emulsion, water repellency also becomes excellent in addition to the oil repellency.

### [Additives]

In addition to the copolymer (A), the aqueous medium (B), and the polyether-modified polydimethyl siloxane (C), as necessary, the oil-repellent composition of the present embodiment may suitably contain well-known and commonly used additives such as other resins, a crosslinker, a thickener, a pH adjuster, a film-forming aid, a plasticizer, a preservative, a defoamer, and a surfactant, as long as the object of the present invention is not impaired.

### "Method of preparing oil-repellent composition"

A method of preparing the oil-repellent composition of the present embodiment includes a step of obtaining, by emulsion polymerization, an aqueous emulsion (aqueous emulsion X) in which the copolymer (A) is dispersed in the aqueous medium (B) and a step of mixing the aqueous emulsion and polyether-modified polydimethyl siloxane (C). In a case of mixing the polymer (D) and other additives, the mixing may be performed in any step as long as the stability of the composition is not impaired.

In the step of obtaining an aqueous emulsion, ethylenically unsaturated monomers (the ethylenically unsaturated carboxylic acid ester monomer (A1), the ethylenically unsaturated carboxylic acid monomer (A2) and the like), the aqueous medium (B) described above, the surfactant, and the polymerization initiator are mixed and subjected to emulsion polymerization.

As a method of emulsion polymerization, for example, a method in which each of the above components is charged at once and then polymerized may be used, or a method in which each component is polymerized while being continuously supplied may be applied. As the method in which each component is polymerized while being continuously supplied, for example, a method in which, in a polymerization initiator solution in which a portion of the polymerization initiator, the aqueous medium (B) and the surfactant are mixed, the remainder of the polymerization initiator and a mixed emulsion in which the ethylenically unsaturated monomer, the aqueous medium (B) and the surfactant are mixed and emulsified are continuously supplied while stirring may be used.

The temperature for the emulsion polymerization can be, for example, 30°C to 85°C.

In the step of mixing the aqueous emulsion and the polyether-modified polydimethyl siloxane (C), for example, stirring and mixing can be performed by using a homodisper 2.5 type (manufactured by PRIMIX Co., Ltd.) or the like.

### [Ethylenically unsaturated monomer]

An ethylenically unsaturated monomer used as a material of the aqueous emulsion includes the ethylenically unsaturated carboxylic acid ester monomer (A1) described above and the ethylenically unsaturated carboxylic acid monomer (A2) described above.

The ethylenically unsaturated carboxylic acid ester monomer (A1) is preferably contained at 80% to 99% by mass, is more preferably contained at 90% to 99% by mass, and is still more preferably contained at 95% to 99% by mass, with respect to the entire of the ethylenically unsaturated monomer.

The ethylenically unsaturated carboxylic acid monomer (A2) is preferably contained at 0.1% to 20% by mass, is more preferably contained at 0.3% to 17% by mass, and is still more preferably contained at 0.5 to 15% by mass, with respect to the entire of the ethylenically unsaturated monomer.

The ethylenically unsaturated monomer may include the above-described other monomers in addition to the ethylenically unsaturated carboxylic acid ester monomer (A1) and the ethylenically unsaturated carboxylic acid monomer (A2).

### [Surfactant]

As a surfactant, a commonly known product which is commercially available can be used, and can be appropriately determined depending on the type of the ethylenically unsaturated monomer, the aqueous medium (B), and the like. As the surfactant, specifically, an anionic surfactant, a nonionic surfactant, a cationic surfactant, a copolymerizable emulsifier, and the like can be used. These surfactants can be used alone or two or more kinds thereof can be used in combination. In addition, in the present embodiment, the amount of surfactant used for emulsion polymerization to obtain an aqueous emulsion is not particularly limited.

Examples of the anionic surfactant include alkyl benzene sulfonate, alkyl sulfuric ester salt, polyoxyethylene alkyl ether sulfuric ester salt, and fatty acid salt.

Examples of the nonionic surfactant include polyoxyethylene alkyl ether, polyoxyethylene alkyl phenyl ether, polyoxyethylene polycyclic finyl ether, polyoxyalkylene alkyl ether, sorbitan fatty acid ester, and polyoxyethylene sorbitan fatty acid ester.

Examples of the cationic surfactant include cetyltrimethyl ammonium bromide and lauryl pyridinium chloride.

When a copolymerizable emulsifier having an ethylenic carbon-carbon double bond is used as a surfactant, an emulsifier can be covalently bonded to the aqueous emulsion obtained by the emulsion polymerization, and thus bleed out of the emulsifier in the oil-repellent composition is prevented, and the stability of the base material subjected to the oil-repellent treatment using the oil-repellent composition becomes enhanced.

In a case where the copolymerizable emulsifier is used as a surfactant, the content of the copolymerizable emulsifier is included in that of the ethylenically unsaturated monomer used as a raw material of the aqueous emulsion.

Examples of the copolymerizable emulsifier include compounds represented by the following formulae (1) to (4). 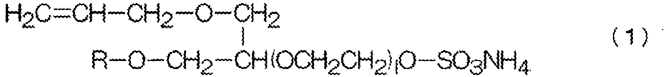 (In Formula (1), R is an alkyl group, and 1 is an integer of 10 to 40.) 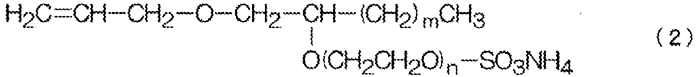 (In Formula (2), m is an integer of 10 to 40, and n is an integer of 10 to 12.) 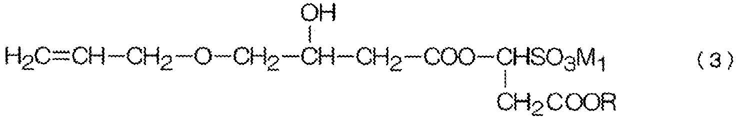 (In Formula (3), R is an alkyl group, and M₁ is NH₄ or Na.) 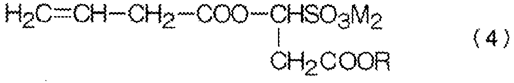 (In Formula (4), R is an alkyl group, and M₂ is Na.)

Preferable examples of R in Formulae (1), (3), and (4) include C₁₀H₂₁ and C₁₂H₂₅, but are not limited thereto.

### [Polymerization initiator]

In the case of emulsion polymerization, it is preferable to use a polymerization initiator. As the polymerization initiator, well-known material such as persulfates such as potassium persulfate and ammonium persulfate, hydrogen peroxide, an azo compound, and organic peroxide can be used. In addition, a redox type initiator by combined use with these polymerization initiators and a reducing agent may be used.

The content of the polymerization initiator is, in terms of the appropriate polymerization rate, preferably 0.01 to 1 part by mass, is more preferably 0.05 to 0.8 parts by mass, and is still more preferably 0.1 to 0.5 parts by mass, with respect to the total 100 parts by mass of ethylenically unsaturated monomer.

The oil-repellent composition of the present embodiment obtained by the preparation method of the present embodiment can impart high oil repellency to the base material. This effect is due to the fact that the oil-repellent composition contains the polyether-modified polydimethyl siloxane (C), and the copolymer (A) has the constituent unit based on the ethylenically unsaturated carboxylic acid monomer (A2).

The oil-repellent composition of the present embodiment can impart high oil repellency to a base material such as fiber, paper, and glass. Therefore, the oil-repellent composition of the present embodiment is preferable as a material for the fiber-treating agent used for the oil-repellent treatment of fibers, a material for the paper-treating agent used for the oil-repellent treatment of paper, and a material of the coating agent for a base material such as glass.

### "Fiber-treating agent"

The fiber-treating agent of the present embodiment contains the oil-repellent composition of the present embodiment. As the fiber-treating agent of the present embodiment, the oil-repellent composition of the present embodiment may be used as it is, and in addition to the oil-repellent composition, and if necessary, well-known and commonly used additives such as an antifoamer, a preservative, a pH adjuster, a surfactant, a crosslinking agent, an antistatic agent, a wetting agent, a thickener, and a pigment may be selected as long as the object of the present invention is not impaired.

The fiber-treating agent of the present embodiment can be used by a method of applying to fibers and drying.

A conventionally known method can be used as a method of applying the fiber-treating agent to the fiber. For example, a method can be used wherein, after impregnating the fiber-treating agent into the fiber by dipping, spray coating, roll coating or the like, the adhesion amount is adjusted by squeezing using a mangle roll or the like.

The drying (heat treatment) temperature of the fiber to which the fiber-treating agent is applied is preferably 80°C to 170°C, and is more preferably 90°C to 150°C. If the drying temperature is 80°C or higher, the drying speed is appropriate, and if it is 170°C or lower, the components will not be thermally deteriorated.

Excellent oil repellency can be obtained with an adhesion amount of 10 to 30% by mass (solid content of the oil-repellent composition) of the fiber mass.

Since the fiber-treating agent of the present embodiment contains the oil-repellent composition of the present embodiment, high oil repellency can be imparted to the fiber. A form of the fiber to be treated by the fiber-treating agent may be any form such as a short fiber (fiber), a linter, a roving, a sliver, a yarn, a woven fabric, a knitted fabric and a non-woven fabric. A material of the fiber to be fiber-treated may, for example, be cellulose fibers such as cotton, flax, jute, hemp, ramie, regenerated cellulose and rayon, and polyvinyl alcohol based synthetic fibers. The fiber preferably contains 30% or more of the above-described material.

### "Paper-treating agent"

The paper-treating agent of the present embodiment includes the oil-repellent composition of the present embodiment. As the paper-treating agent of the present embodiment, the oil-repellent composition of the present embodiment may be used as it is, and in addition to the oil-repellent composition, and if necessary, well-known and commonly used additives such as an antifoamer, a preservative, a pH adjuster, a surfactant, a crosslinking agent, an antistatic agent, a wetting agent, a thickener, and a pigment may be selected as long as the object of the present invention is not impaired.

The paper-treating agent of the present embodiment can be used by a method of applying to the paper and drying.

A conventionally known method can be used as a method of applying a paper-treating agent to paper. For example, a method can be used wherein, after impregnating the fiber-treating agent into the paper by dipping, spray coating, roll coating or the like, the adhesion amount is adjuested by squeezing using a mangle roll or the like.

The drying (heat treatment) temperature of the paper to which the paper-treating agent is applied is preferably 80°C to 170°C, and is more preferably 90°C to 150°C. If the drying temperature is 80°C or higher, the drying speed is appropriate, and if it is 170°C or lower, the components will not be thermally deteriorated.

Excellent oil repellency can be obtained with an adhesion amount of 10 to 30% by mass (solid content of the oil-repellent composition) of the paper mass.

Since the paper-treating agent of the embodiment includes the oil-repellent composition of the present embodiment, high oil repellency can be imparted to the paper. The paper which is treated by a paper-treating agent is not particularly limited, and for example, papers for general purpose which consist of pulp cellulose are exemplified.

### "Coating agent"

The coating agent of the present embodiment contains the oil-repellent composition of the present embodiment. As the coating agent of the present embodiment, the oil-repellent composition of the present embodiment may be used as it is, and in addition to the oil-repellent composition, and if necessary, well-known and commonly used additives such as an antifoamer, a preservative, a pH adjuster, a surfactant, a crosslinking agent, an antistatic agent, a wetting agent, a thickener, and a pigment may be selected as long as the object of the present invention is not impaired.

The coating agent of the present embodiment can be used by a method of applying to the base material and drying.

A conventionally known method can be used as a method of applying a coating agent to the base material. Examples of the method include spray coating, brush coating, roller coating, trowel coating, dipping, air knife, flow coating, bar coating, roll coating, gravure coating, and a method using an applicator and the like.

The drying (heat treatment) temperature of the base material to which the coating agent is applied is preferably 80°C to 170°C, and is more preferably 90°C to 150°C. If the drying temperature is 80°C or higher, the drying speed is appropriate, and if it is 170°C or lower, the components will not be thermally deteriorated.

Excellent oil repellency can be obtained with an adhesion amount of 10 to 30% by mass (solid content of the oil-repellent composition) of the base material mass.

The coating agent of the present embodiment contains the oil-repellent composition of the present embodiment, and thus can impart high oil repellency to the base material. Examples of the base material coated with a coating agent include glass, a polyolefin resin, a polyester resin, a polycarbonate resin, an acrylonitrile butadiene styrene copolymer (ABS resin), a polystyrene resin, and a molded article thereof (film, sheet, cup, or the like) and metal.

### "Method of oil-repellent-treating base material"

A method of oil-repellent-treating a base material of the present embodiment includes a step of coating a base material with the oil-repellent composition of the present embodiment and then heat-treating the coated base material at 80°C to 170°C.

As a method of applying the oil-repellent composition to the base material, for example, the same method as that of applying the fiber-treating agent, the paper-treating agent, or the coating agent described above can be used.

The heat treatment temperature at the time of heat treatment of the base material coated with the oil-repellent composition is set to be 80°C to 170°C, and is preferably 100°C to 150°C. When the heat treatment temperature is set to be 80°C or higher, the heat treatment time becomes short, thus realizing high productivity. In addition, when the heat treatment temperature is set to be 170°C or lower, the oil-repellent composition can be prevented from being deteriorated by the heat treatment.

The heat treatment time at the time of the heat treatment is not particularly limited, and can be determined in accordance with the coating amount of the oil-repellent composition provided on the base material.

### EXAMPLES

Hereinafter, the present invention will be more specifically described by way of examples and comparative examples. The present invention is not limited to the following examples.

### <Example 1>

120 g of ion-exchanged water as an aqueous medium (B), and 1 g of NEWREX R (prepared by NOF CORPORATION: normal sodium dodecyl benzene sulfonate), which is an anionic surfactant, was charged in a five-neck separable flask equipped with a stirrer, a thermometer, a nitrogen gas inlet tube, a reflux condenser, and a dropping funnel, and the temperature was raised to 80°C.

On the other hand, 420 g of ion-exchanged water as an aqueous medium (B), 15 g of anionic surfactant (NEWREX R), 70 g of methyl methacrylate (prepared by Mitsubishi Rayon Co., Ltd.), which is an ethylenically unsaturated carboxylic acid ester monomer (A1), 320 g of 2-ethyl hexyl acrylate (prepared by Nippon Shokubai Co., Ltd.), and 10 g of acrylic acid (prepared by Nippon Shokubai Co., Ltd.), which is an ethylenically unsaturated carboxylic acid monomer (A2), were charged in a 1-liter beaker, and the mixture was emulsified with a homomixer to obtain a mixed emulsion.

In the above flask, 0.3 g of potassium persulfate as a polymerization initiator was charged, and with the inside temperature of the flask maintained at 80°C, the above mixed emulsion and 44 g of a 3% by mass of aqueous potassium persulfate solution were added dropwise while being stirred from another funnel for 3 hours, and emulsion polymerization was performed. After completion of the dropwise addition of the mixed emulsion and 3% by mass of aqueous potassium persulfate solution, the inside of the flask was maintained at 80°C for 1 hour for aging. Thereafter, after cooling in the flask was started to cool down the temperature to 30°C, neutralization with 25% aqueous ammonia was performed to adjust to pH 7 so as to obtain 400 g of an aqueous emulsion.

To the obtained aqueous emulsion, 100 g (10 g of non-volatile components relative to 400 g of aqueous emulsion) of BYK SILCLEAN 3720 (solvent solution type, 10% by mass of non-volatile components (prepared by BYK-Chemie Japan K.K)), which is a hydroxyl group-containing polyether-modified polydimethyl siloxane (C1), as a polyether-modified polydimethyl siloxane (C) was added and mixed to obtain an oil-repellent composition. The non-volatile component (solid content concentration) of the obtained oil-repellent composition was 40% by mass.

### <Examples 2 to 10 and Comparative Examples 1 to 4>

An oil-repellent composition was produced in the same manner as in Example 1 except that the materials and contents of the ethylenically unsaturated carboxylic acid ester monomer (A1), the ethylenically unsaturated carboxylic acid monomer (A2), and the polyether-modified polydimethyl siloxane (C) were changed as indicated in Table 1 and Table 2.

### <Synthesis of aqueous emulsion (Y)>

### Synthesis of isostearyl acrylate emulsion

120 g of ion-exchanged water as an aqueous medium (B) and 1 g of NEWREX R (prepared by NOF CORPORATION: normal sodium dodecyl benzene sulfonate), which is an anionic surfactant, were charged in a five-neck separable flask equipped with a stirrer, a thermometer, a nitrogen gas inlet tube, a reflux condenser, and a dropping funnel, and the temperature was raised to 80°C.

On the other hand, 520 g of ion-exchanged water as an aqueous medium (B), 15 g of anionic surfactant (NEWREX R), 300 g of isostearyl acrylate (prepared by Osaka Organic Chemical Industry Ltd.) as ester (D1) of alcohol having a chain hydrocarbon group having 8 to 18 carbon atoms and (meth)acrylic acid were mixed in a 1-liter beaker, and the mixture was emulsified with a homomixer to obtain a mixed emulsion.

In the above flask, 0.3 g of potassium persulfate as a polymerization initiator was further charged. In addition, with the inside temperature of the flask maintained at 80°C, the above mixed emulsion and 44 g of a 3% by mass of aqueous potassium persulfate solution were added dropwise while being stirred from another funnel for 3 hours, and emulsion polymerization was performed. After completion of the dropwise addition of the mixed emulsion and 3% by mass of aqueous potassium persulfate solution, the inside of the flask was maintained at 80°C for 1 hour for aging. Thereafter, after cooling in the flask was started to cool down the temperature to 30°C, neutralization with 25% aqueous ammonia was performed to adjust to pH 7. As a result, 1000 g of an aqueous emulsion (isostearyl acrylate emulsion) containing 30% by mass of polymer (D) having a chain hydrocarbon group having 8 to 18 carbon atoms was obtained.

### Synthesis of isostearyl acrylate/methyl methacrylate copolymer emulsion

An isostearyl acrylate/methyl methacrylate copolymer emulsion was obtained by the same method of obtaining the isostearyl acrylate emulsion except for using 150 g of isostearyl acrylate and 150 g of methyl methacrylate as the ester (D1) of alcohol having a chain hydrocarbon group having 8 to 18 carbon atoms and (meth)acrylic acid.

### Synthesis of lauryl acrylate emulsion

A lauryl acrylate emulsion was obtained by the same method of obtaining the isostearyl acrylate emulsion except for using 300 g of lauryl acrylate as ester (D1) of alcohol having a chain hydrocarbon group having 8 to 18 carbon atoms and (meth)acrylic acid.

### <Examples 11 to 14 and Comparative Example 5>

An oil-repellent composition was prepared in the same manner as in Example 1 except for the following.

The ethylenically unsaturated carboxylic acid ester monomer (A1), the ethylenically unsaturated carboxylic acid monomer (A2), and the polyether-modified polydimethyl siloxane (C), the materials and contents were changed as indicated in Table 1 and Table 2. In the mixing step of the polyether-modified polydimethyl siloxane (C), the aqueous emulsion (Y) containing the polymer (D) having a chain hydrocarbon group having 8 to 18 carbon atoms was added with the materials and contents indicated in Table 1 and Table 2.

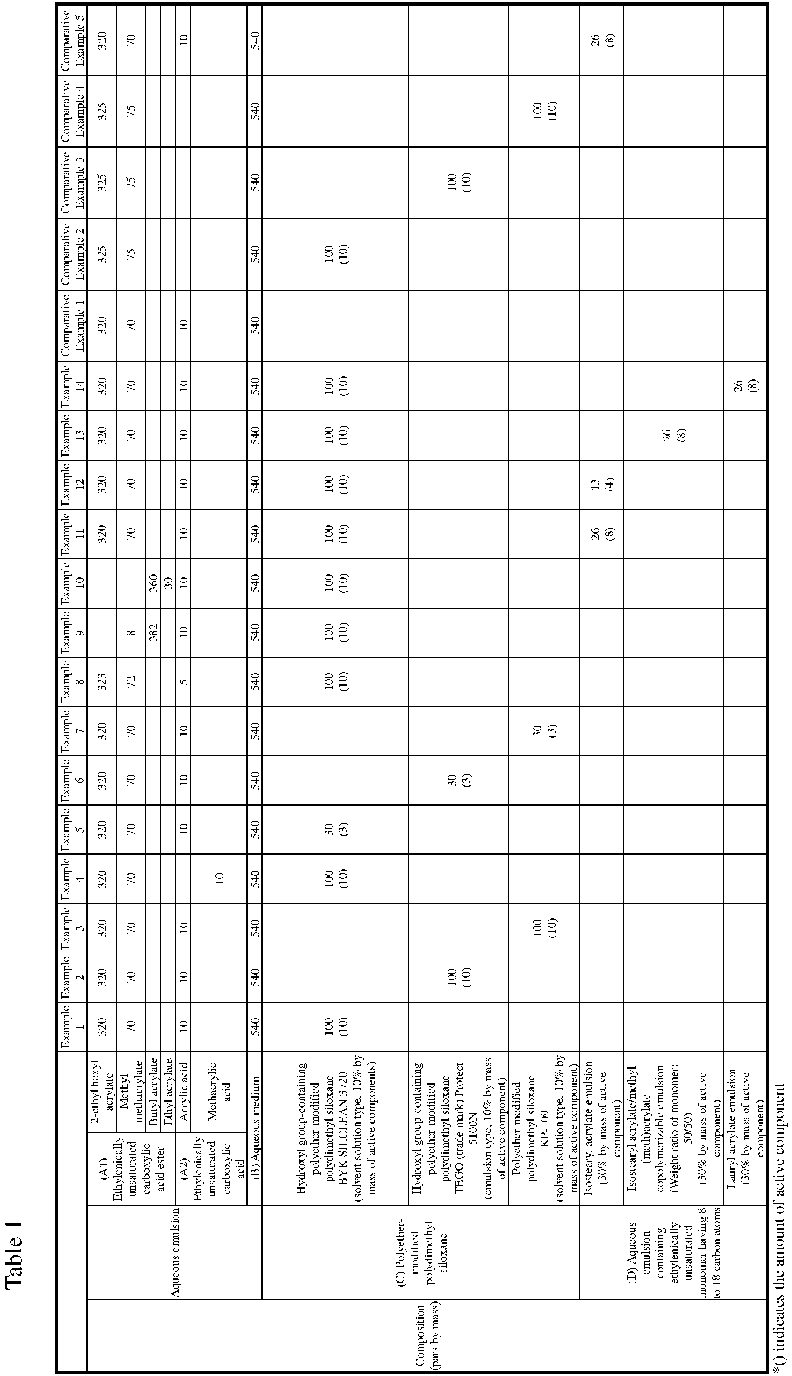

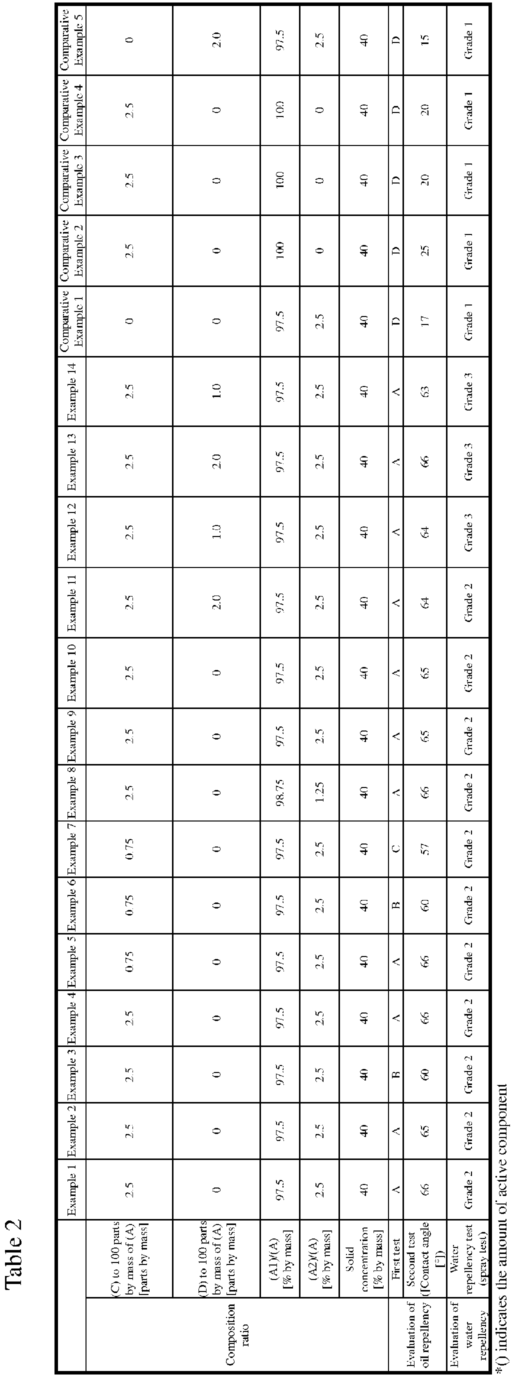

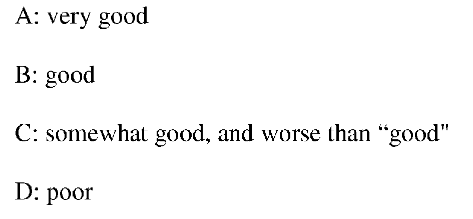

"(A)" shown in Table 1 and Table 2 show the copolymer having the constituent unit based on the ethylenically unsaturated carboxylic acid ester monomer (A1) and the constituent unit based on the ethylenically unsaturated carboxylic acid monomer (A2). The generated amount of the copolymer (A) shown in Table 1 and Table 2 is regarded as the total amount (400 parts by mass) of the ethylenically unsaturated carboxylic acid ester monomer (A1) and the ethylenically unsaturated carboxylic acid monomer (A2). Butyl acrylate and ethyl acrylate in the ethylenically unsaturated carboxylic acid ester monomer (A1) in Table 1 and Table 2 were prepared by NIPPON SHOKUBAI Co., Ltd.

Further, in Table 1 and Table 2, hydroxyl group-containing polyether-modified polydimethyl siloxane (C2) in the polyether-modified polydimethyl siloxane (C) is TEGO (trade mark) Protect 5100N (emulsion type, 10% by mass of non-volatile component) (prepared by Evonik Japan)). The polyether-modified polydimethyl siloxane (C3) is KP-109 (solvent solution type, 10% by mass of non-volatile component, molecular weight 17,000 (prepared by Shin-Etsu Chemical Co., Ltd.)).

### [Oil-repellent evaluation]

Using the oil-repellent composition obtained in Examples 1 to 14 and Comparative Examples 1 to 5, a first test and a second test to perform oil-repellent treatment on a base material described below were performed, and the oil repellency of the base material after oil-repellent treatment was evaluated.

The results are illustrated in Tables 1 and 2.

### "First test"

A cotton cloth (cotton shirtings No. 3) as a base material was immersed into the oil-repellent composition diluted twice with water so that the composition was applied at an adhesion amount of 20% by mass (oil-repellent composition solid content) of the base material mass. This was dried by heat treatment at 130°C for 5 minutes using an oven to obtain a test cloth.

0.03 ml of a first grade oil-repellent test solution (nujol) specified in the oil repellent test AATCC 118 method was gently placed on one side of the obtained test cloth, and a state of the test solution after 1 minute was visually observed. The results were evaluated according to the following criteria. The test cloth and the test solution were used at 23°C. In addition, the test solution was allowed to stand on the test cloth and observed visually in a thermostatic chamber at 23°C.

### (Criteria)

A: A test solution holds a spherical drop. (Very good)
B: The ball drops of the test solution collapse and the test solution spreads on the test cloth but does not penetrate into the test cloth. (Good)
C: The test solution penetrates into the test cloth after 30 seconds to 1 minute has passed after the test solution is allowed to stand. (Somewhat good, and worse than "Good")
D: The test solution penetrates into the test cloth within 30 seconds after the test solution is allowed to stand. (Poor)

### "Second test"

The oil-repellent composition was applied to a glass plate as a base material using an applicator such that the thickness before drying was 150 µm. This was dried by heat treatment at 130°C for 5 minutes using an oven to obtain a test body (coating material).

2 µl of a first grade oil-repellent test solution (nujol) specified in the oil repellent test of AATCC 118 method was gently placed on the surface of the obtained test body to which the oil-repellent composition was applied, and a contact angle of the test solution after 10 seconds was measured by the θ/2 method using an automatic contact angle meter CA-VP type (manufactured by Kyowa Interface Science Co., Ltd.). In a case where the contact angle was 55° or greater, the oil repellency was evaluated as good.

### [Evaluation of water repellency]

Evaluation was performed based on the JIS L1092 water repellency test (spray test). A test cloth and a test solution stored at 23°C were used. The water repellency of one side of each of the cotton test cloths obtained in Examples and Comparative examples was evaluated in a constant temperature room at a room temperature of 23°C. The criteria were as follows.
Grade 1: Wetting on the entire surface
Grade 2: Wetting on half of surface, and small individual wet portions in which water sinks into fabric are formed
Grade 3: Small individual droplet-like wetting on surface
Grade 4: No wetting on surface but adhesion of small water droplets
Grade 5: No wetting and no adhesion of water droplets on surface

As indicated in Tables 1 and 2, the results of the first test in which the base material was subjected to oil-repellent treatment on the base material using the oil-repellent composition of Examples 1 to 14 are A (very good), B (good), or C (somewhat good, and worse than "good"). As a result of the second test, the contact angle was 55° or greater. From this, it was found that the oil-repellent compositions of Examples 1 to 14 can impart high oil repellency to the base material. Above all, from the results of Example 11 to Example 14, it was found that the oil-repellent composition containing the polymer (D) can impart high water repellency in addition to oil repellency.

On the other hand, as indicated in Tables 1 and 2, in a case where the oil-repellent composition of Comparative Example 1 which does not contain polyether-modified polydimethyl siloxane (C) or Comparative Examples 2 to 5 which does not use the ethylenically unsaturated carboxylic acid monomer (A2) was used, in all cases, the result of the first test was D (Poor), and the result of the second test was a contact angle of smaller than 55°.

### Industrial Applicability

The oil-repellent composition of the present invention contains a copolymer (A), an aqueous medium (B), and a polyether-modified polydimethyl siloxane (C). The present invention provides an oil-repellent composition which is capable of imparting high oil repellency to a base material, and a method of preparing the oil-repellent composition.

## Claims

1. An oil-repellent composition, comprising:
an aqueous emulsion in which a copolymer (A) containing, as an essential component, a constituent unit based on an ethylenically unsaturated carboxylic acid ester monomer (A1) and a constituent unit based on an ethylenically unsaturated carboxylic acid monomer (A2) is dispersed in an aqueous medium (B); and
polyether-modified polydimethyl siloxane (C).

2. The oil-repellent composition according to Claim 1,
wherein polyether described in the polyether-modified polydimethyl siloxane (C) is hydroxyl group-containing polyether-modified polydimethyl siloxane.

3. The oil-repellent composition according to Claim 1 or 2,
wherein a content of the polyether-modified polydimethyl siloxane (C) is 0.1 to 20 parts by mass with respect to 100 parts by mass of the copolymer (A).

4. The oil-repellent composition according to any one of Claims 1 to 3,
wherein the constituent unit based on the ethylenically unsaturated carboxylic acid ester monomer (A1) is contained at 80% to 99% by mass with respect to the entire constituent units of the copolymer (A).

5. The oil-repellent composition according to any one of Claims 1 to 4,
wherein the constituent unit based on the ethylenically unsaturated carboxylic acid monomer (A2) is contained at 0.1% to 20% by mass with respect to the entire constituent units of the copolymer (A).

6. The oil-repellent composition according to any one of Claims 1 to 5,
wherein the ethylenically unsaturated carboxylic acid ester monomer (A1) is ester of alcohol having 1 to 8 carbon atoms and (meth)acrylic acid.

7. The oil-repellent composition according to any one of Claims 1 to 6,
wherein the ethylenically unsaturated carboxylic acid ester monomer (A1) is one or two or more kinds selected from the group consisting of methyl (meth)acrylate, ethyl (meth)acrylate, butyl (meth)acrylate, and 2-ethyl hexyl (meth)acrylate.

8. The oil-repellent composition according to any one of Claims 1 to 7,
wherein the ethylenically unsaturated carboxylic acid monomer (A2) is unsaturated carboxylic acid having 3 to 14 carbon atoms.

9. The oil-repellent composition according to any one of Claims 1 to 8,
wherein the ethylenically unsaturated carboxylic acid monomer (A2) is at least one of acrylic acid and methacrylic acid.

10. The oil-repellent composition according to any one of Claims 1 to 9, further comprising:
a polymer (D) having a constituent unit based on ester (D1) of alcohol having a chain hydrocarbon group having 8 to 18 carbon atoms and (meth)acrylic acid.

11. A fiber-treating agent comprising the oil-repellent composition according to any one of Claims 1 to 10.

12. A paper-treating agent comprising the oil-repellent composition according to any one of Claims 1 to 10.

13. A coating agent comprising the oil-repellent composition according to any one of Claims 1 to 10.

14. A method of preparing the oil-repellent composition according to any one of Claims 1 to 10, the method comprising:
a step of obtaining, by emulsion polymerization, an aqueous emulsion in which a copolymer (A) having a constituent unit based on an ethylenically unsaturated carboxylic acid ester monomer (A1) and a constituent unit based on an ethylenically unsaturated carboxylic acid monomer (A2) is dispersed in an aqueous medium (B); and
a step of mixing the aqueous emulsion and a polyether-modified polydimethyl siloxane (C).

15. A method of oil-repellent-treating a base material, comprising:
a step of coating a base material with the oil-repellent composition according to any one of Claims 1 to 10 and then heat-treating the coated base material at 80°C to 170°C.
